# EUROPEAN PATENT SPECIFICATION

(11) **EP 0 899 141 B1**
(45) Date of publication and mention of the grant of the patent: **03.11.2004**
(21) Application number: 98202770.8
(22) Date of filing: 18.08.1998
(51) Int. Cl.: B60J 7/057

(54) **Crank device for driving a movable part of a vehicle**
Kurbelantrieb für einen bewegbaren Teil eines Fahrzeugs
Mécanisme à manivelle pour l'entrainement d'une partie mobile de véhicule

(30) Priority: 25.08.1997 NL 1006841
(43) Date of publication of application: 03.03.1999
(73) Proprietor: Inalfa Roof Systems Group B.V., 5804 AH Venray (NL)
(72) Inventor: Boersma, Egbert, 5708 CR Helmond (NL); Manders, Peter Christiaan Leonardus Johannes, 5961 SM Horst (NL)
(74) Representative: Metman, Karel Johannes

(56) References cited:
- EP-A- 0 313 125
- WO-A-90/00987
- FR-A- 2 435 365

## Description

The present invention relates to a crank device for driving a movable part of a vehicle, such as a closing element of an open roof construction.

A crank device of this kind is known, for example from EP-B-0 313 125.

The object of the invention is to further improve such a known crank device.

In order to accomplish that objective, the crank device according to the invention possesses the features as defined in claim 1.

The invention will be explained in more detail with reference to the drawings, which show an embodiment of the crank device according to the invention.

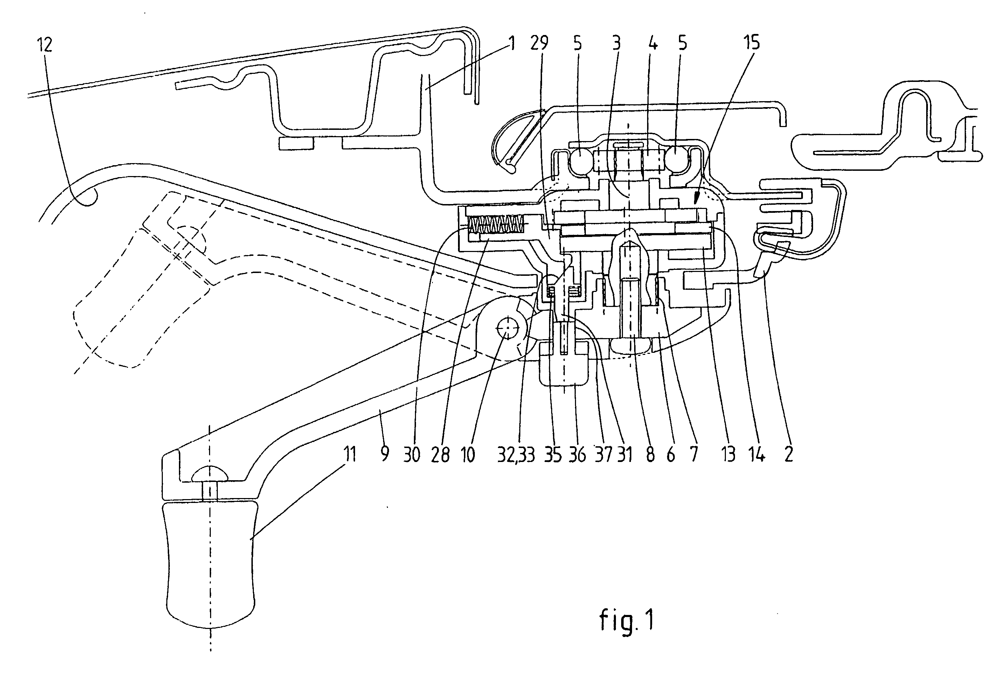

Figs. 1 and 2 are cross-sectional views of a crank device according to the invention for driving the panel of a tilting-sliding roof for a vehicle, showing the crank device in a locked and in an unlocked position.

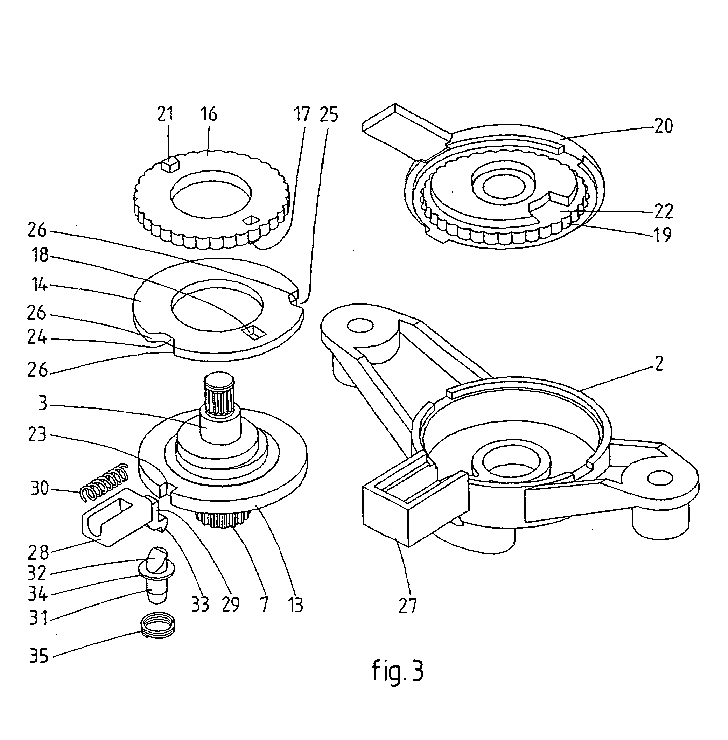

Fig. 3 is a perspective, exploded view of the main components of the crank device of Figs. 1 and 2.
Figs. 4a -4d are diagrammatic plan views of the crank device of Figs. 1 and 2, showing the crank device in four different locked or limited positions.

The drawings show a crank device for driving a closing element (not shown) of an open roof construction, in particular a panel of a tilting-sliding roof for a vehicle. The panel of the tilting-sliding roof is arranged for being moved by means of the crank device, between a closed position and a rearwardly moved position under the fixed roof of the vehicle on the one hand, and between said closed position and a rearwardly, upwardly sloping ventilating position on the other hand. To that end, the crank device is provided with a housing 2 which is mounted on the frame 1 of the tilting-sliding roof, in which housing a vertical shaft 3 is rotatably mounted. A driving pinion 4 is fixedly mounted on said shaft 3, which pinion has teeth which are in engagement with pull-push cables 5 comprising circumferential ribs, said cables 5 converting the rotation of the driving pinion 4 into a sliding movement of a control element for the panel.

A hub 6 is fixedly mounted, by means of teeth 7 and a screw 8, on the end of the shaft which faces away from driving pinion 4 and which projects from housing 2.

A crank arm 9 is pivotally connected at one end to hub 6 by means of a horizontal pin 10. A knob 11 is formed on the end of the crank remote from hub 6, via which knob the user can take hold of the crank arm. The crank arm 9 comprises two stable positions; an operative position illustrated in full lines, in which the crank device can be operated by means of the crank arm, and an inoperative resting position illustrated in dashed lines, in which the crank arm 9 is stowed away in a recess 12 in the roof lining or a similar covering. The crank arm 9 is held in said two stable positions by means of a spring (not shown) or the like.

The crank device is provided with locking means for locking the driving pinion 4 in predetermined positions of the panel, in this case the first position is the closed position of the panel between the rearwardly moved positions and the upwardly pivoted position of the panel, and the second position is a comfort position between the closed position and the extreme rearwardly moved position of the panel. The purpose of the locking means is to automatically lock the driving pinion in the respective position of the panel when the panel is moved past the position in question, so that the panel will be automatically stopped at the correct position at all times, for example in the closed position. By releasing the locking engagement of driving pinion 4, the panel can be moved to another position again by means of the crank device.

The locking means are provided with a stop disc 13, which is integral and coaxial with vertical shaft 3, and also with a coaxial retaining ring 14, which is rotatably mounted on shaft 3 and which is in driving engagement therewith via a reduction mechanism 15. Said reduction mechanism 15 comprises a blocker ring 16 which is eccentrically mounted on shaft 3 and which engages in a radially enlarged recess 18 in retaining ring 14 with a projection 17, so that eccentric rotation of blocker ring 16 will cause said retaining ring to rotate. The teeth of blocker ring 16 are in engagement with interior teeth 19 in a cover 20 of housing 2, which extend coaxially round the central axis of shaft 3. The difference in the number of teeth and the tooth pitch determine the extent of the reduction by the reduction mechanism 15, and consequently the ratio of the rotational speeds of shaft 3 and retaining ring 14. Said ratio of the reduction mechanism 15 has been selected so that movement of the panel from the extreme upwardly pivoted position to the extreme rearwardly slid position corresponds with a rotation of the retaining ring 14 through an angle of slightly less than 360°. Said extreme positions are determined by a limiting element 21 on blocker ring 16, which cooperates with a stop 22 in the cover 20 of housing 2. Accordingly, the rotational position of the retaining ring 14 provides an indication with regard to the position of the panel, since every position of the retaining ring 14 corresponds with a small range of positions of the panel, and in combination with the stop disc 13 an exact relation between the position of the panel and that of the retaining ring 14 is obtained.

A rectangular recess 23 is formed in the circumference of stop disc 13, which recess functions as a stop element, whilst two recesses 24 and 25 functioning as releasing elements for the closed position and a comfort position respectively are formed in the circumference of retaining ring 14, which recesses are slightly wider in the circumferential direction than recess 23, and which possess oblique side walls 25 which diverge towards the circumference of retaining ring 14. The diameter of retaining ring 14 is very slightly larger than that of stop disc 13.

Housing 2 is provided with a rectangular projecting part 27 comprising a cavity, which extends radially with respect to the central axis of vertical shaft 3 and which receives a locking element, here in the form of a locking pin 28. Locking pin 28 comprises a nose 29 on the end facing stop disc 13, which nose fits precisely in the recess 23 in stop disc 13. A compression spring 30 loads the locking pin 28 in the direction of stop disc 13.

Locking pin 28 is capable of mating with a control element, here in the form of a control pin 31 comprising a control surface 32 extending at a self-braking angle, for example of 45°, which mates with a control surface 33 on nose 29 of locking pin 28, which extends at the same angle or at a complementary angle, as the case may be, in such a manner that movement of the axial control pin 31 in a direction parallel to the central axis of vertical shaft 3 is converted into a radial movement of locking pin 28. Surfaces 32 and 33 are smooth in the circumferential direction of hub 6 and in the radial direction of control pin 31, and no forces can be transmitted in that direction. Control pin 31 may be of relatively light construction, therefore. Control pin 31 is furthermore provided with a shoulder 34, against which a spring 35 abuts for the purpose of loading the control pin 31 in the direction of locking pin 28 or in the direction of the unlocked position thereof. The force of the spring 35 for the control pin 31 is considerably smaller than that of the spring 30 of the locking pin 28. Like locking pin 28, control pin 31 is guided in housing 2.

Hub 6 comprises a push-button 36, which likewise extends axially with respect to vertical shaft 3, which push-button can be aligned with the control pin 31 in a specified rotational position of hub 6 so as to move control pin 31 in axial direction for the purpose of moving locking pin 28 to the unlocked position. In the locked position of locking pin 28, the lower end of locking pin 31 extends into a hole 37 in which the push-button 36 is guided. Said hole 37 is aligned with the recess 23 in stop disc 13, seen in circumferential direction, so that control pin 31 will automatically be aligned with push-button 36 in the locked position.

The operation of the locking means of the crank device is as follows.

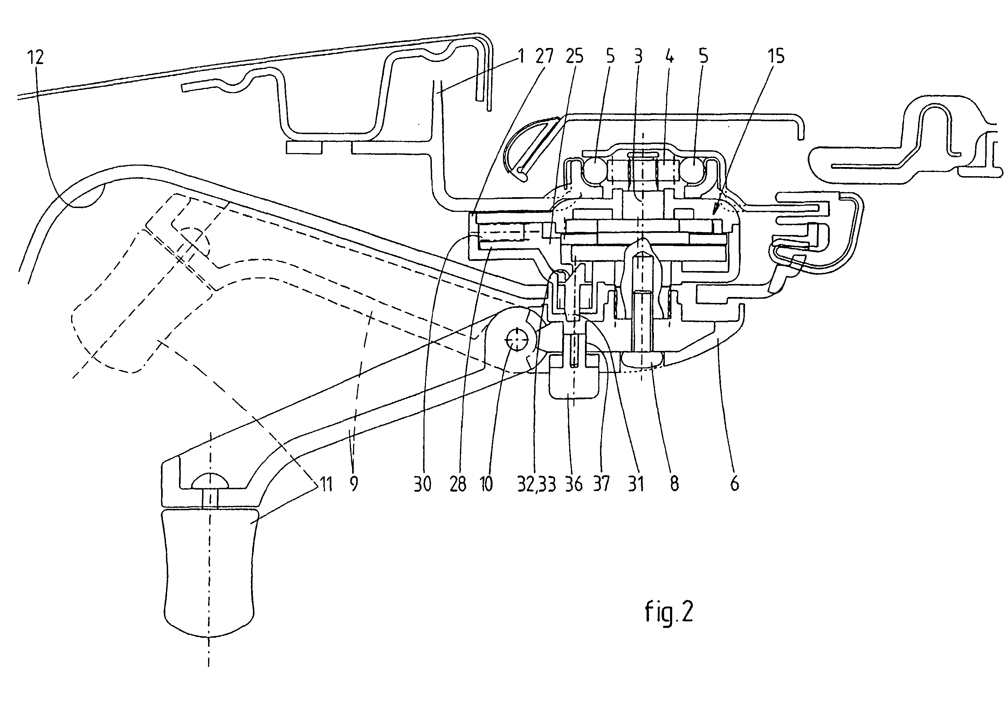

In every position of the panel of the tilting-sliding roof, with the exception of the closed position and the comfort position, the retaining ring 14 of the locking means is rotated so that the recesses 24 and 25 therein are spaced from the locking pin 28 by some distance. Locking pin 28 bears with its locking nose 29 against the outer circumference of the retaining ring 14. This situation is shown in Fig. 2. When shaft 3 and pinion 4 are rotated by crank arm 9 in such a manner that the panel is moved to the closed position or to the comfort position, the retaining ring 14 is rotated to a smaller degree via the reduction mechanism 15, whereby recess 24 or 25 is moved in the direction of locking pin 28.

In contrast thereto, stop disc 13 rotates with the same circumferential speed as shaft 3, so that the recess 23 in the stop disc passes the locking pin 28 at every revolution of shaft 3 and pinion 4. However, since the locking nose 29 of locking pin 28 bears against the circumference of retaining ring 14, whose diameter is slightly larger than that of stop disc 13, the locking pin 28 will remain in its original position each time recess 23 in stop disc 13 passes.

When the panel has been moved to the closed position or to the comfort position, retaining ring 14 has been rotated to such a degree that the recess 24 or 25 present therein has become aligned with the locking nose 29 of locking pin 28. This causes the locking nose 29 of locking pin 28 to bear against the circumference of stop disc 13.

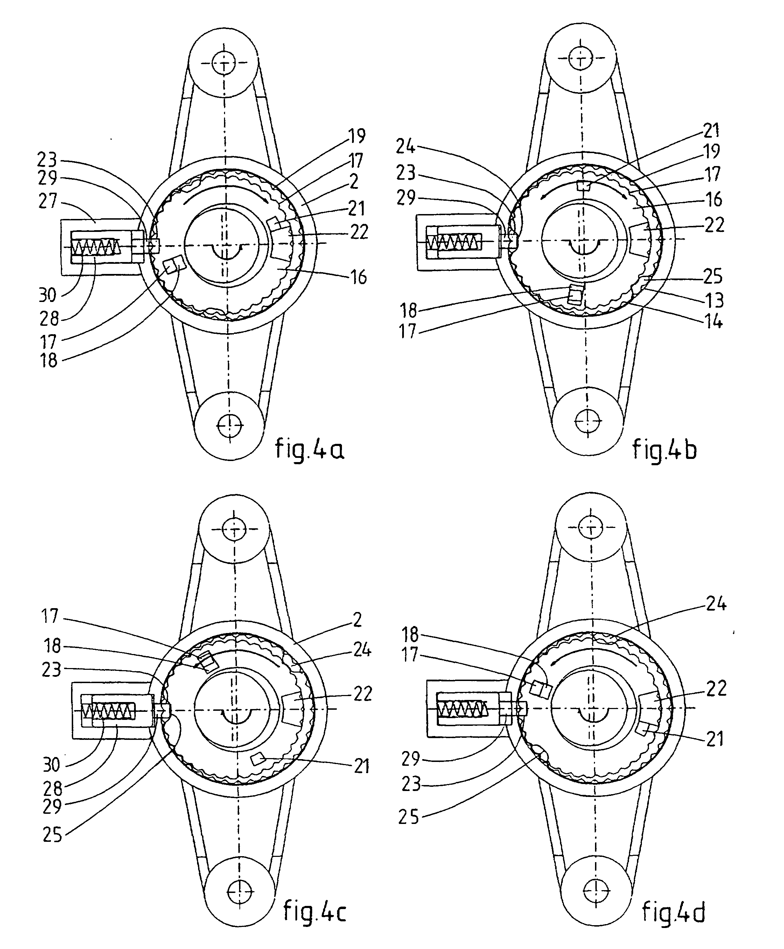

When recess 23 in stop disc 13 is likewise aligned with locking pin 28 in this situation, so that recesses 23 and 24 or 23 and 25 coincide, locking pin 28 will be urged into recess 23 in stop disc 13 with its nose 29, thus locking vertical shaft 3 and along with it driving pinion 4 and hub 6 of crank arm 9 against further rotation. These positions are shown in Figs. 4b and 4c. Since locking pin 28 and control pin 31 abut smoothly against each other, seen in the circumferential direction of hub 6, and consequently cannot transmit forces in circumferential direction, the robust locking pin 28 will take up all the driving forces, and the control pin is spared. In this manner the panel is automatically locked exactly in its closed position or in the comfort position, without distracting the driver's attention from the traffic. In the illustrated embodiment, the distance between the closed position and the comfort position is bridged by eight revolutions of shaft 3, whilst the distance between the closed position and the extreme rearwardly moved position of the panel (Fig. 4d) is bridged by ten revolutions of vertical shaft 3. The extreme ventilating position (Fig. 4a) is reached after two revolutions in the reverse direction, starting from the closed position. A comparison of Figs. 4a and 4d shows that limiting element 21 of blocker ring 16, which rotates along with retaining ring 14, is positioned on different sides of the stop 22 on housing cover 20 in the two figures.

In order to move locking pin 28 from the unlocked position to the locked position, it is also necessary to move control pin 31 against the force of spring 35, but since the force of compression spring 30 is considerably larger than that of spring 35, this will take place in a reliable manner at all times.

If the driver of the vehicle wishes to move the panel of the tilting-sliding roof from the closed position or from the comfort position to a different position, the driver will have to press push-button 36 in hub 6 in order to urge control pin 31 inwards, thereby assisted by the force of spring 35. The axial movement of control pin 31 is converted, via control surfaces 32 and 33, into radial movement of locking pin 28 towards the unlocked position. If hub 6, and thus shaft 3 and also stop disc 13, are rotated a very small distance about the central axis, locking pin 28 will be retained in its unlocked position again by the circumference of stop disc 13 outside recess 23. In that situation, the crank device can be normally rotated to another position again by crank arm 9 so as to move the panel.

From the foregoing it will be apparent that the invention provides a crank device which can be operated in a comfortable manner and which ensures a reliable operation.

The invention is not limited to the above-described embodiment as shown in the drawing, which can be varied in several ways within the scope of the invention. Thus, the invention can be used with all kinds of manually operated roofs comprising closing elements which must be automatically stopped in one or more positions. Examples of other kinds of roofs are spoiler roofs, folding roofs, slatted roofs and the like.

## Claims

1. A crank device for driving a movable part of a vehicle, such as a closing element of an open roof construction, comprising:
a stationary part (2);
a driving pinion (4), which is operatively connected with said movable part, and which is rotatably supported by said stationary part (2);
a crank arm (9) comprising a hub (6), which is connected with said driving pinion when said closing element is being driven;
locking means comprising a stop element (13, 23) and rotating along with the driving pinion (4) in a fixed relation;
a locking element (28) which automatically engages the stop element (13, 23) of the locking means in at least one predetermined position of said movable part so as to lock the driving engagement of said movable part in said predetermined position;
a control element (31) for said locking element (28), which functions to return the locking element (28) from the locked position to the unlocked driving position, **characterized in that** said control element (31) and said locking element (28) are movable at at least substantially right angles with respect to each other, and **in that** they comprise a right-angled transmission (32, 33) for transmitting the movement through said at least substantially right angle, wherein the control element (31) and the locking element (28) are provided with spring means (30, 35), the spring means (30) of the locking element (28) acting in the direction of the locked position, while the spring means (35) of the control element (31) acting in the direction of the unlocked position, the force of the spring means (30) of the locking element (28) being greater than that (35) of the control element (31).

2. A crank device according to claim 1, wherein said locking element (28) and said control element (31) are movable in at least substantially radial and at least substantially axial direction respectively with respect to the axis of rotation of said hub (6).

3. A crank device according to claim 1 or 2, wherein both the control element (31) and the locking element (28) are disposed in said stationary part (2), whilst the hub (6) of the crank arm (9) is provided with a push-button (36), which can be aligned with the control element (31), at least in said predetermined position.

4. A crank device according to any one of the preceding claims, wherein said locking means are provided with two mating rotatable members, with the stop member (13) being provided with said stop element (23) and the retaining member (14) being provided with a releasing element (24, 25), and wherein said stop member (13) and said retaining member (14) have different transmission ratios relative to said driving pinion (4), so that the releasing element (24, 25) on the retaining member (14) only allows engagement between the locking element (28) and the stop element (23) in a rotational position of the two members relative (13, 14) to each other which corresponds with the predetermined position of the movable part.

5. A crank device according to claim 4, wherein said retaining member (14) comprises a limiting element (21), which mates with a stop (22) on the stationary part (2) for the purpose of limiting the rotation of the retaining member (14).

6. A crank device according to claim 4 or 5, wherein said retaining member (14) comprises at least two releasing elements (24, 25) for locking the driving engagement thereof in at least two positions.

7. A crank device according to any one of the claims 4 - 7, wherein an eccentric gear transmission (15) is provided between said retaining member (13) and said pinion (4) or said stop member.

8. A crank device according to any of the preceding claims, wherein said locking means are fixedly connected with the hub (6) of the crank arm (9), and wherein said locking element (28) is guided in a guide (27) in said stationary part (2), and that said control element (31) and said locking element (28) are in continuous engagement with each other, but they are free from engagement in circumferential direction, seen from the hub (6).

9. An open roof construction comprising a crank device according to any one of the preceding claims.

## Patentansprüche

1. Kurbelvorrichtung zum Antreiben eines beweglichen Teils eines Fahrzeugs, wie etwa eines Schließelements einer Offen-Dach-Konstruktion, aufweisend:
ein stationäres Teil (2),
ein Antriebs-Zahnrad (4), das mit dem beweglichen Teil wirkungsmäßig verbunden ist und das von dem stationären Teil (2) rotierbar gehalten wird,
einen Kurbelarm (9), der eine Nabe (6) aufweist, die mit dem Antriebs-Kegelrad verbunden ist, wenn das Schließelement angetrieben wird,
Verriegelungsmittel, die ein Stoppelement (13, 23) aufweisen und die in einer festen Relation mit dem Antriebs-Kegelrad (4) rotieren,
ein Verriegelungselement (28), das automatisch in das Stoppelement (13, 23) der Verriegelungsmittel in zumindest einer vorgegebenen Position des beweglichen Teils eingreift, um den Antriebseingriff des beweglichen Teils in der vorbestimmten Position zu verriegeln,
ein Steuerelement (31) für das Verriegelungselement (28), welches arbeitet, um das Verriegelungselement (28) aus der Verriegelungs-Position in die Entriegelungs-Antriebsposition zurückzustellen,
**dadurch gekennzeichnet, dass** das Steuerelement (31) und das Verriegelungselement (28) zumindest im Wesentlichen im rechten Winkel zueinander bewegbar sind und dass sie eine rechtwinklige Übertragungsvorrichtung (32, 33) zum Übertragen der Bewegung über den zumindest im Wesentlichen rechten Winkel hinweg aufweisen, wobei das Steuerelement (31) und das Verriegelungselement (28) mit Federmitteln (30, 35) ausgestattet sind, wobei das Federmittel (30) des Verriegelungselements (28) in Richtung der Verriegelungs-Position wirkt, wohingegen das Federmittel (35) des Steuerelements (31) in Richtung der Entriegelungs-Position wirkt, wobei die Kraft des Federmittels (30) des Verriegelungselements (28) größer ist als diejenige (35) des Steuerelements (31).

2. Kurbelvorrichtung gemäß Anspruch 1, wobei das Verriegelungselement (28) und das Steuerelement (31) zumindest im Wesentlichen in radialer bzw. zumindest im Wesentlichen in axialer Richtung in Bezug auf die Rotationsachse der Nabe (6) beweglich sind.

3. Kurbelvorrichtung gemäß Anspruch 1 oder 2, wobei sowohl das Steuerelement (31) als auch das Verriegelungselement (28) in dem stationären Teil (2) angeordnet sind, wobei die Nabe (6) des Kurbelarms (9) mit einem Druckknopf (36) ausgestattet ist, der zumindest in der vorgegebenen Position zu dem Steuerelement (31) ausgerichtet werden kann.

4. Kurbelvorrichtung gemäß einem der vorgenannten Ansprüche, wobei die Verriegelungsmittel mit zwei zusammenpassenden rotierbaren Elementen ausgestattet sind, wobei das Stoppteil (13) mit dem Stoppelement (23) ausgestattet ist und das Halteteil (14) mit einem Freigabeelement (24, 25) ausgestattet ist, und wobei das Stoppteil (13) und das Halteteil (14) unterschiedliche Übersetzungsverhältnisse relativ zu dem Antriebs-Zahnrad (4) haben, sodass das Freigabeelement (24, 25) an dem Halteteil (14) nur einen Eingriff zwischen dem Verriegelungselement (28) und dem Stoppelement (23) in einer Rotationsposition der beiden Teile (13, 14) relativ zueinander erlaubt, die mit der vorgegebenen Position des beweglichen Teils korrespondiert.

5. Kurbelvorrichtung gemäß Anspruch 4, wobei das Halteteil (14) ein Begrenzungselement (21) aufweist, das mit einem Stopp (22) an dem stationären Teil (2) zum Zweck der Begrenzung der Rotation des Halteteils (14) zusammenpasst.

6. Kurbelvorrichtung gemäß Anspruch 4 oder 5, wobei das Halteteil (14) zumindest zwei Freigabeelemente (24, 25) zum Verriegeln des Antriebseingriffes davon in zumindest zwei Positionen aufweist.

7. Kurbelvorrichtung gemäß einem der Ansprüche 4 bis 7, wobei ein exzentrisches Getriebe (15) zwischen dem Halteteil (13) und dem Zahnrad (4) oder dem Stoppteil vorgesehen ist.

8. Kurbelvorrichtung gemäß einem der vorgenannten Ansprüche, wobei die Verriegelungsmittel fest mit der Nabe (6) des Kurbelarms (9) verbunden sind und wobei das Verriegelungselement (28) in einer Führung (27) in dem stationären Teil (2) geführt ist, und wobei das Steuerelement (31) und das Verriegelungselement (28) in kontinuierlichem Eingriff miteinander stehen, wobei sie aber von der Nabe (6) aus gesehen in Umfangsrichtung eingriffsfrei sind.

9. Offen-Dach-Konstruktion, die eine Kurbelvorrichtung gemäß irgendeinem der vorangegangenen Ansprüche aufweist.

## Revendications

1. Mécanisme à manivelle pour l'entraînement d'une partie mobile de véhicule telle qu'un élément obturateur d'une structure de toit ouvrant, comprenant :
une partie stationnaire (2) ;
un pignon menant (4) qui est en liaison opérante avec ladite partie mobile et est en appui rotatif sur ladite partie stationnaire (2) ;
un bras de manivelle (9) comprenant un moyeu (6), qui est relié audit pignon menant lorsque ledit élément obturateur est en cours d'entraînement ;
des moyens de verrouillage comprenant un élément d'arrêt (13, 23) et tournant conjointement au pignon menant (4), selon une relation fixe ;
un élément de verrouillage (28) venant automatiquement en prise avec l'élément d'arrêt (13, 23) des moyens de verrouillage, dans au moins l'une des positions prédéterminées de ladite partie mobile, afin de verrouiller la prise d'entraînement de ladite partie mobile dans ladite position prédéterminée ;
un élément de commande (31) affecté audit élément de verrouillage (28) et ayant pour fonction de ramener ledit élément de verrouillage (28) à la position déverrouillée d'entraînement, à partir de la position verrouillée,
**caractérisé par le fait que** ledit élément de commande (31) et ledit élément de verrouillage (28) sont mobiles l'un par rapport à l'autre selon des angles au moins sensiblement droits ; et **par le fait qu'**ils comprennent une transmission (32, 33) agencée à angle droit, pour transmettre le mouvement selon ledit angle au moins sensiblement droit, sachant que l'élément de commande (31) et l'élément de verrouillage (28) sont pourvus de moyens élastiques (30, 35), le moyen élastique (30) de l'élément de verrouillage (28) agissant dans la direction de la position verrouillée, tandis que le moyen élastique (35) de l'élément de commande (31) agit dans la direction de la position déverrouillée, la force du moyen élastique (30) de l'élément de verrouillage (28) étant supérieure à celle de celui (35) de l'élément de commande (31).

2. Mécanisme à manivelle selon la revendication 1, dans lequel ledit élément de verrouillage (28) et ledit élément de commande (31) sont respectivement mobiles, par rapport à l'axe de rotation dudit moyeu (6), dans des directions au moins sensiblement radiale et au moins sensiblement axiale.

3. Mécanisme à manivelle selon la revendication 1 ou 2, dans lequel l'élément de commande (31) et l'élément de verrouillage (28) sont logés, l'un et l'autre, dans ladite partie stationnaire (2), tandis que le moyeu (6) du bras de manivelle (9) est doté d'un bouton-poussoir (36) pouvant être aligné avec l'élément de commande (31), au moins dans ladite position prédéterminée.

4. Mécanisme à manivelle selon l'une quelconque des revendications précédentes, dans lequel lesdits moyens de verrouillage sont équipés de deux pièces rotatives complémentaires, la pièce de butée (13) étant munie dudit élément d'arrêt (23), et la pièce de retenue (14) étant pourvue d'un élément de libération (24, 25) ; et dans lequel ladite pièce de butée (13) et ladite pièce de retenue (14) présentent des rapports de transmission différents vis-à-vis dudit pignon menant (4), de sorte que l'élément de libération (24, 25) situé sur la pièce de retenue (14) autorise une venue en prise, entre l'élément de verrouillage (28) et l'élément d'arrêt (23), uniquement dans une position relative prise par rotation par les deux pièces (13, 14), qui correspond à la position prédéterminée de la partie mobile.

5. Mécanisme à manivelle selon la revendication 4, dans lequel ladite pièce de retenue (14) comprend un élément de limitation (21) qui coopère avec une butée (22), sur la partie stationnaire (2), en vue de limiter la rotation de ladite pièce de retenue (14).

6. Mécanisme à manivelle selon la revendication 4 ou 5, dans lequel ladite pièce de retenue (14) comprend au moins deux éléments de libération (24, 25), afin de verrouiller sa prise d'entraînement dans au moins deux positions.

7. Mécanisme à manivelle selon l'une quelconque des revendications 4-7, dans lequel une transmission (15) à denture excentrée est prévue entre ladite pièce de retenue (13), et ledit pignon (4) ou ladite pièce de butée.

8. Mécanisme à manivelle selon l'une quelconque des revendications précédentes, dans lequel lesdits moyens de verrouillage sont reliés rigidement au moyeu (6) du bras de manivelle (9) ; dans lequel ledit élément de verrouillage (28) est guidé dans un guide (27) ménagé dans ladite partie stationnaire (2) ; et dans lequel ledit élément de commande (31) et ledit élément de verrouillage (28) sont en prise continue l'un avec l'autre, mais sont exempts de venue en prise dans la direction circonférentielle, en observant à partir du moyeu (6).

9. Structure de toit ouvrant comprenant un mécanisme à manivelle selon l'une quelconque des revendications précédentes.
